# EUROPEAN PATENT SPECIFICATION

(11) **EP 2 510 146 B1**
(45) Date of publication and mention of the grant of the patent: **20.04.2016**
(21) Application number: 10835343.4
(22) Date of filing: 10.12.2010
(51) Int. Cl.: D06H 5/00, D21F 1/00, D21F 7/10

(54) **HINGE TYPE SEAMING ELEMENT FOR JOINING ENDS OF AN INDUSTRIAL TEXTILE**
SCHARNIERARTIGES FALZELEMENT ZUR VERBINDUNG VON ENDEN EINER INDUSTRIETEXTILIE
ELÉMENT DE FORMATION DE COUTURES À ARTICULATION POUR JOINDRE DES EXTRÉMITÉS D'UN TEXTILE INDUSTRIEL

(30) Priority: 11.12.2009 CA 2688168
(43) Date of publication of application: 17.10.2012
(73) Proprietor: AstenJohnson, Inc., Charleston, SC 29405 (US)
(72) Inventor: STONE, Richard, Almonte, Ontario K0A 1A0 (CA); MANNINEN, Allan, Stittsville, Ontario K2S 2G4 (CA); LACROIX, Michel, Kanata, Ontario K2W 1A2 (CA)
(74) Representative: Laufhütte, Dieter
(86) International application number: PCT/CA2010/001955
(87) International publication number: WO 2011/069258

(56) References cited:
- WO-A1-96/34146
- CA-A1- 2 685 623
- US-A- 3 309 790
- US-B1- 6 328 079
- US-B2- 7 381 306

## Description

### FIELD OF THE INVENTION

This invention relates to seaming of industrial textiles and, in particular, to a hinge type seaming element for attachment to the opposed lateral ends or edges of such textiles, to enable the joining of those edges to render the textiles endless. More particularly, the invention relates to seaming elements for use in a pair, each of which is attached separately to one of two opposed edges of the fabric to be seamed together such that, thereafter, the pair of seaming elements can be brought together and attached to each other to form a secure seam compatible with the intended end use of the fabric.

### BACKGROUND OF THE INVENTION

Industrial textiles are either woven or nonwoven fabrics often having a length that is much greater than their width. These textiles find utility in a variety of industrial applications, such as filtration, papermaking, conveyance, food preparation, and the like. Such fabrics are frequently formed by weaving on wide industrial looms, but other methods of manufacture are known, for example, employing nonwoven arrays of yarns or sheets of film. The resulting fabric can be formed during manufacture so that it is endless and ready for installation on the apparatus for which it is intended without the need to join its ends. However, industrial textiles are more commonly formed by means of a flat or planar forming process and will require a seam to facilitate their installation on the machine for which they are intended.

Various methods are known and used for joining and seaming industrial textiles. If the fabric is formed from an array of yarns or an extruded film, then the lateral ends are frequently joined either by bonding or welding the opposed edges to one another, or by attaching a separate seaming element to each end by means of a bonding process to facilitate the join. If the fabric is formed in a weaving process, such as is commonly used for the manufacture of papermaking and filtration fabrics, then it is common to employ one of several different methods to create loops in yarns which would otherwise end at the edge of the fabric to be seamed, and then to connect the loops of one end or edge to the opposing end or edge, either by inserting a coil through the loops to form a coil seam, or by interdigitating the loops to form a passage through which a pintle is inserted to form a pin seam. To create the loops, ends of selected yarns are conventionally woven back individually into the fabric to a sufficient distance to be secure, and may be further secured by stitching or other known means. These methods suffer from several disadvantages, including the time taken to perform the step of making the loops, and difficulties associated with ensuring sufficient seam strength, at the same time as compatibility of the characteristics of the fabric at the seam area and in the general fabric body.

It has now been found that it is possible to provide a seaming element to a fabric, by attaching one of a pair of components of the seaming element to each of two opposing end regions or edges of a fabric to be seamed, in a simple, economical, and secure manner such that, when the end regions are brought together, land areas in each of the pair of components can be selectively aligned with each other or with apertures to enable the linking of the land areas in such manner as to provide a channel through which an additional securing means such as a pintle can be inserted to secure the connection.

It has further been found that the seaming elements can be attached by welding or other secure joining methods to the end regions of individual yarns of a woven fabric, or to selected surfaces of a nonwoven fabric, at the end or edge to be seamed, either by securing selected yarns of a woven textile to outer surfaces of a seaming element, or securing the seaming element to inner surfaces of layers of a nonwoven textile, and that the seaming elements can be constructed in dimensions which are compatible with the overall fabric thickness so as to avoid or substantially minimize any difference in thickness at the seam area in comparison with the thickness of the fabric body.

It has further been found that where the industrial textile is constructed of a suitable film material, the components of the seaming element can be constructed integrally with the body of the textile.

US 3 309 790 A discloses a method of joining the ends of a relatively thin open-weave fabric. The opposite ends of the fabric are folded over and stitched to form looped ends. Opposing looped ends are staggered relative to each other and interlaced so as to form a channel through which a securing pin is inserted.

### SUMMARY OF THE INVENTION

The invention provides a seaming element for joining the ends or edges of a woven or nonwoven industrial textile comprising the features of claim 1. The seaming element is comprised of two planar components, which are constructed from film, and which comprise one or more layers of thermoplastic or thermoset polymeric film. Such film can be formed in any suitable manner, for example by extrusion, or as a planar textile comprising a woven mesh or a nonwoven structure. A textile structure can also be combined with one or more layers of a non-textile structure, such as an extruded film; or fibers can be encapsulated within such non-textile structure. For some applications, it may be advantageous to provide a folded or bonded woven structure.

As used herein, the term "film" encompasses both extruded polymeric sheet-like materials, as well as textile sheets which can be woven or nonwoven (i.e. comprising entangled fibers.)

The polymeric film, or individual yarns or fibers in textile components, can be formed from a suitable polymer, such as are known and used for industrial textiles. These include, but are not limited to, polyethylene terephthalate (PET), polybutylene terephthalate (PBT), polyphenylene sulphide (PPS), polyethylene naphthalate (PEN), polyetheretherketone (PEEK) and blends or copolymers thereof, as well as various polyimides and polyamides.

If a woven textile structure is used to form the planar components of the seaming element, preferably the structure will have a warp and weft yarn density of from about 50 to about 150 yarns per inch (19.7 - 59 yarns/cm) and the individual yarns will have a cross-sectional size of from about 0.08mm to about 0.40mm. However, the selection of appropriate yarn density and size will be dependent on the intended end use of the seaming component and the environment in which it will be placed.

If the seaming component is formed from a nonwoven material, the yarn density per unit length and width will be of the approximately same order of magnitude as for a woven structure, measured in the usual manner for nonwoven materials in relation to orientation index and basis weight.

As an additional option for textile components for the seaming element, bicomponent yarns may also be used. Such yarns include two components, one of which forms a sheath over another core material, and preferably the yarns include a sheath comprised of a polymer having a lower melt point than the core yarn material. Such bicomponent yarns can be oriented in either or both the intended machine direction or cross-machine direction, or they may be randomly arranged in a nonwoven textile film.

Further, textile components, either woven or nonwoven, may be coated or impregnated with a polymer, for example polyurethane, to provide a reinforcing matrix to prevent yarn ravel and enhance longitudinal or cross direction stability.

For each type of textile structure, the thermoplastic monofilaments or multifilaments will melt when the structure is slit, for example by a laser or ultrasonic cutter, thereby sealing any open edges and thus preventing unwanted ravelling of the component yarns in the textile structure.

The seaming element and each component have a length in the direction of the eventual seam line that is equal to or less than the relevant dimension of the textile into which it is to be installed, i.e. for an end seam, the cross direction width (CD), or for an edge, the applicable length in the machine direction (MD); a top side which when in use faces the product to be conveyed on the industrial textile; and a bottom side which when in use faces away from the top side towards the machine with which the industrial textile is in running contact when in use. Each component has along its length a first free edge which is adapted to be joined with a similar component, and a second edge region for attachment to an end of the textile it is intended to join. The seaming components of the invention, whether formed from a slit film or textile, will have a finished thickness to be compatible with the thickness (calliper) of the textile to which it is to be joined, so as to avoid any unwanted discontinuity in the seamed textile. For many textiles for which the seaming components are intended to be used, a typical thickness would be from about 0.20mm to about 0.40mm, and preferably about 0.25mm.

The two components can also be provided as end regions of a non-woven industrial textile. For example, where the textile is constructed from a film, the seaming components can comprise integral end regions of the film.

Prior to attachment of the components to each other, and to the industrial textile if constructed separately therefrom, the polymeric film of each of the planar components is selectively slit or cut in a similar and regular manner to provide a plurality of preferably rectilinear strips, which at their opposing ends remain integral with the body of the respective component. The strips are preferably spaced regularly across the length of each component, and are defined by either a set of alternating open areas and land areas, or a series of land areas separated by slits. The slits and strips of each component should be compatible with those of the other component, but are not necessarily identical. However, preferably each of the slits or cuts in each component has the same width in the direction parallel to the eventual seam line as the slits or cuts in the other. The length of each slit in the direction normal to the free edge of the respective component can be selected to suit the intended closure for the seam, the slits and land areas being dimensioned to provide sufficient out-of-plane deformation to accommodate a pintle or similar joining means. Further, the ends of the slits must have sufficient clearance from the free edge of the component and the edge to be attached to the textile to be seamed, so as to leave an uncut region of suitable dimension and strength to maintain the integrity of the component when subjected to the expected forces in the intended operating environment. The slits are preferably formed by one of laser cutting, water jet cutting, die cutting or other similar means.

For use of the components to form a seam, the land areas, i.e. the strips, formed between the cuts or slits in the first and second components are each deformed out of plane so that they can accept a pintle or similar joining means. This is done by deforming alternate land areas in each component either up and out of the plane towards the top side of the generally planar component, or down towards the bottom side of the generally planar component. As discussed further below, either the deformed land areas of the first component fit into and are mated with the open areas of the second component (and vice versa), or the land areas of the first component are mated with corresponding land areas of the second component, and both are deformed out of plane together in the same manner.

In either case, deformation of the land areas creates a series of lateral openings along the lengths-of both components, which openings are dimensioned to accept a joining means. When the two components are aligned to form the seaming element, and the joining means is inserted along the aligned components to form the joint of the seaming element, the joining means is held in place against the front and back ends of the slit regions of each component by tension exerted on the components when attached to the textile. The first and second components of the seaming element, along with the joining means, thus form a hinge type seam which is suitable for attaching the opposed ends of the textile for which it is intended so as to render it endless. Preferably, the front free edge of each component is mated with the body of the component to which it is joined by suitable means. This can be accomplished by bonding means such as adhesives, addition of bonding materials such as Velcro ® and the like, or by forming corresponding ribs and slots (in a manner similar to that found in Ziplok ® or other nonwoven interlocked type structures such as are disclosed by Baker et al. in US 6,124,015). To minimize or avoid discontinuity at the free edges in relation to the outer surface of the component to which they are secured, the free edges can be tapered. Alternatively, where the components are secured between layers of a textile to be seamed, for example between layers of yarns at the ends of a woven textile, the textile edges, e.g. the yarn ends, may be secured onto a first component so as to abut the free edge of the second component and thus provide the required continuity, and provide protection of the free edge from abrasive forces in the operating environment.

Further, the strips can be provided in a plurality of rows, preferably parallel across the CD width of the elements, so that each row can receive a securing means, generally a pintle. For such embodiments, the individual strips of a second row can each be aligned with the individual strips of the first row, or can be offset in various ways. Such arrangement can provide advantages of greater stability and more even distribution of stress from the tensile load on the seaming components.

The invention therefore seeks to provide a seaming element for selectively seaming a pair of seamable edges of an industrial textile, the seaming element comprising a first component and a second component wherein each component (i) is constructed of a substantially planar polymeric film, and comprises a textile body contacting portion and a free edge; and (ii) comprises at least a first row comprising a plurality of pairs of substantially parallel slits, each slit having a first end and a second end, each pair defining a strip which is deformable out of a plane of the film, the pairs being arranged in a spaced apart relationship across the respective component such that each of the first ends is substantially equidistant from the free edge of the component;
wherein when the first and second components are attached to respective seaming edges of the pair and the two components are brought together, selectively deformed strips of the first component are alignable with selectively deformed strips of the second component to interengage the first and second components and to define a channel dimensioned to receive a seam securing means.

In one embodiment, for each component
(a) each strip is constructed and arranged to be deformed in the same direction in relation to the plane of the film, and in an aligned position of the components to project towards the plane of the other component; and
(b) between each adjacent pair of the strips, the slits further at least partly define an aperture constructed and arranged to receive and accommodate therethrough one of the deformed strips of the other component.

Alternatively, in another embodiment, for each component, the strips are constructed and arranged to be deformed in alternating directions in relation to the plane of the film, such that in an aligned position of the components each strip of the first component is adjacent along its length to one of the strips of the second component, and each strip of the second component is adjacent along its length to one of the strips of the first component.

Preferably, the securing means is a pintle, having a cross-sectional configuration selected from circular, elliptical and rectangular.

In one embodiment, each component comprises a plurality of rows of pairs of slits, preferably two rows of pairs of slits.

The invention also seeks to provide an industrial textile comprising a seaming element according to the invention; and depending on the materials of construction, the seaming element can be integrally constructed with the textile.

The invention further seeks to provide a method of seaming an opposing pair of seamable portions of an industrial textile, the method comprising the steps of
(a) providing a seaming element according to the invention;
(b) securing the first component of the seaming element to a first member of the opposing pair of seamable portions;
(c) securing the second component of the seaming element to a second member of the opposing pair of seamable portions;
(d) aligning the first and second components with each other;
(e) interengaging the strips of the first component with the strips of the second component to provide a channel; and
(f) securing a securing means within the channel.

### BRIEF DESCRIPTION OF THE DRAWINGS

The invention will now be described with reference to the drawings, in which
Figure 1 is a perspective view of a first embodiment of a seaming element according to the present invention;
Figure 2 is a cross-sectional side view of the seaming element shown in Figure 1;
Figure 3 is a perspective view of a second embodiment of a seaming element according to the present invention;
Figure 4 is a cross-sectional side view of the seaming element shown in Figure 3;
Figure 5 is a perspective view of a third embodiment of a seaming element according to the present invention;
Figure 6 is a perspective view of the seaming element shown in Figure 5, illustrating the insertion of a pintle; and
Figure 7 is a cross-sectional side view of the seaming element shown in Figure 5.

### DETAILED DESCRIPTION OF THE DRAWINGS

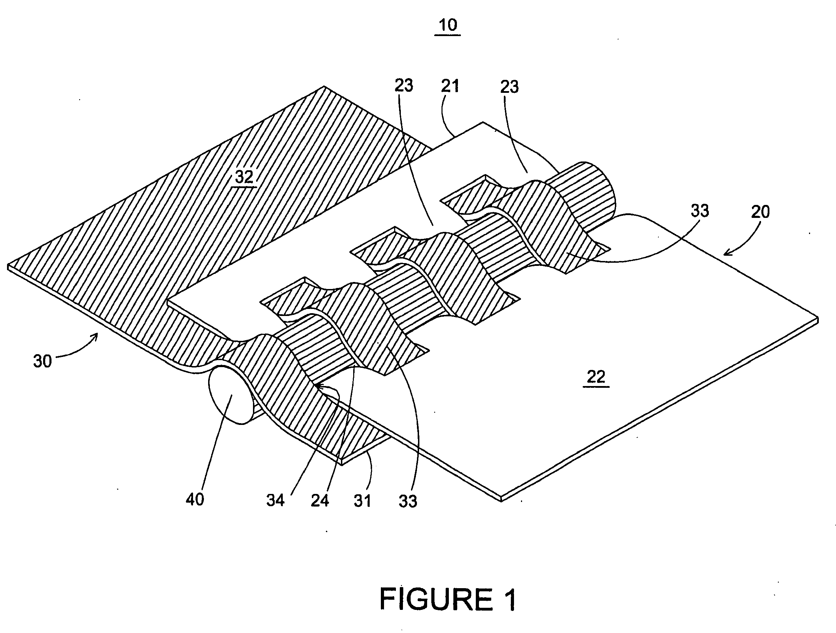

Figure 1 shows in perspective view a seaming element 10 according to a first embodiment of the present invention. The seaming element 10 is comprised of a first component 20 and a second component 30, each of which is substantially planar until selectively deformed, as described below, for connection together as a pair. The components 20 and 30 are preferably film extrusions formed of a polymeric thermoplastic or thermoset material. Alternatively, as discussed above, one or both of the components 20, 30 can be a planar woven or nonwoven textile sheet comprised of individual yarns, which optionally may be coated or encapsulated, and in which the slits have been sealed during preparations by melting.

First component 20 has a free edge 21 and a second edge region 22, which is either attachable to an end or edge of an industrial textile (not shown) to be seamed, or forms an integrally constructed part of such end or edge. In the body of the first component 20 between the free edge 21 and the second edge region 22, apertures 24 are selectively cut, regularly spaced between a plurality of land areas, shown here as strips 23.

Similarly, second component 30 has a free edge 31 and a second edge region 32, and has been provided with apertures 34 regularly spaced between a plurality of land areas, shown here as strips 33. Apertures 34, and the spacing between them, are dimensioned to be compatible with the dimensions and locations of strips 23 in first component 20; and the apertures 24 in first component 20 are similarly dimensioned and located to be compatible with strips 33 in second component 30.

To prepare the first and second components 20, 30 to be attachable to each other, the strips 23 of first component 20 and the strips 33 of second component 30 are suitably deformed in the desired direction, for example in a thermoforming process, so that they protrude out of the general plane of the body of the respective component 20 or 30, by a sufficient distance to accommodate a securing means, for example pintle 40.

To join the first and second components 20, 30, the first component 20 is placed over the second component 30 so that the free edge 21 of the first component 20 is over the body of the second component 30, so that each of the deformed strips 23 is aligned over one of the apertures 34 in the second component 30. At the same time, the deformed strips 33 of second component 30 are aligned below one of the apertures 24 in first component 20. As the deformed strips 23, 33 are moved into the respective apertures 34, 24, the strips 23, 33 together cooperate to form a channel 60 which runs the length of the seaming element 10, along the eventual seam line, so that a securing means, such as pintle 40, can be inserted through channel 60 to secure the first and second components 20 and 30 together. The first and second components 20, 30 are secured to the respective ends or edges of the industrial textile to be joined, if they are not already integrally constructed with the industrial textile. Thereafter, when tension is applied to the second edge regions 22 and 32 of first and second components 20, 30, the free edges 21 and 31 move towards each other until further movement is halted by pintle 40 located in channel 60. Tension thus holds the pintle 40 in place and prevents further movement.

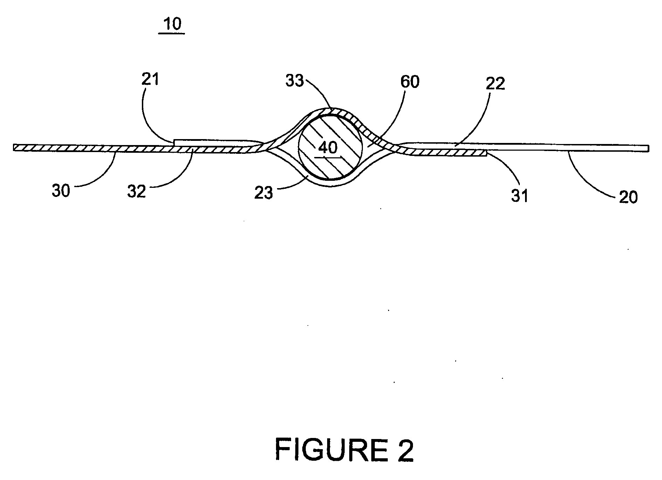

Referring now to Figure 2, which is a side view of the seaming element 10 shown in Figure 1, first and second components 20 and 30 are shown in the connected position, secured by pintle 40. In this Figure, free edge 21 of first component 20 is located above and in contact with second edge region 32 of second component 30, and free edge 31 of second component 30 is shown located beneath and in contact with second edge region 22 of component 20. Strips 23 and 33 from first and second components 20 and 30 respectively are shown as deformed to create channel 60 through which pintle 40 has been inserted, to secure the first and second components 20 and 30 to each other, further lateral movement in the plane of the seaming element of the free edges 21 and 31 being prevented by pintle 40.

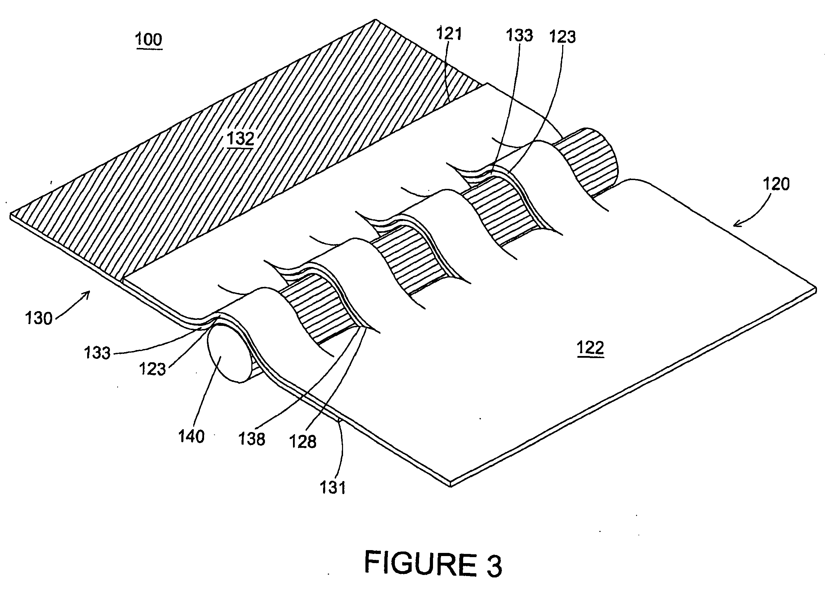

Figure 3 is a perspective view of a seaming element according to a second embodiment of the present invention, in which seaming element 100 is comprised of a first component 120 and a second component 130, each of which is substantially planar until selectively deformed, as described below, for connection together as a pair. The components 120 and 130 are preferably film extrusions formed of a polymeric thermoplastic or thermoset material.

Alternatively, as noted above in relation to Figure 1, one or both of the components 20, 30 can be a planar woven, or nonwoven textile sheet comprised of individual yarns which may be coated or encapsulated and in which the slits have been sealed during preparation by melting.

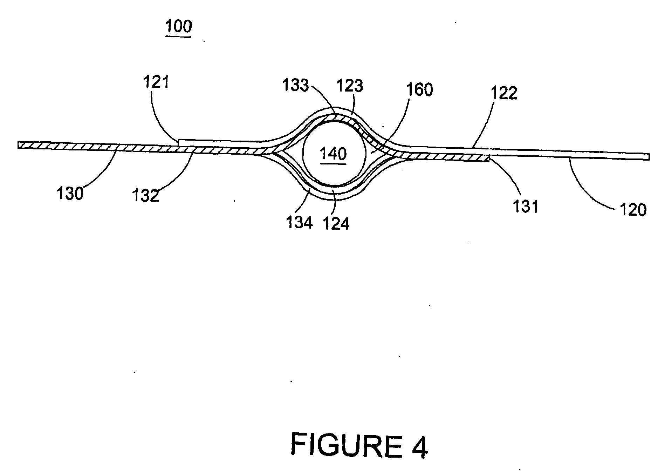

Similarly to first and second components 20 and 30 in the embodiment of Figures 1 and 2, in the embodiment shown in Figures 3 and 4, first component 120 has a free edge 121 and a second edge region 122, which is either attachable to an end or edge of an industrial textile (not shown) to be seamed, or forms an integrally constructed part of such end or edge, and second component 130 has a free edge 131 and a second edge region 132.

However, in this embodiment, in each of the first component 120 between the free edge 121 and the second edge region 122, and the second component 130 between the free edge 131 and the second edge region 132, a series of slits 128, 138 respectively are made, to define a plurality of regularly spaced strips 123, 133 respectively, alternated with strips 124, 134 (shown in Figure 4).

The strips 123, 133 can be of any suitable configuration, and the strips 123 need not be of the same size or shape as the strips 133, provided that the dimensions and locations are mutually compatible to allow the connection of the first and second components 120, 130 as described below. Similarly, the strips 124, 134 can be of any suitable configuration, and the strips 124 need not be of the same size or shape as the strips 134, provided that the dimensions and locations are mutually compatible to allow the connection of the first and second components 120, 130 in the following manner.

To prepare the first and second components 120, 130 to be attachable to each other, the strips 123, 133 and 124, 134 are deformed in any suitable manner, similarly to the strips in the embodiment of Figures 1 and 2, but for each of the first and second components 120, 130, the strips 123, 133 are deformed up towards the top side of the respective one of the first and second components 120, 130, and the strips 124, 134 are deformed down towards the bottom side of those components. The deformations are preferably created by means of a thermoforming process, so that the deformed strips protrude out of the plane of the body of the respective one of the first and second components 120, 130, alternating upwards and downwards, in each case by a sufficient distance to accommodate a suitable securing means, such as pintle 140.

To join the first and second components 120, 130, the first component 120 is placed over the second component 130 so that the free edge 121 of the first component 120 is over the body of the second component 130, so that each of the deformed strips 123 is aligned over one of the deformed strips 133 in the second component 130, and the deformed strips 124 of the first component 120 are aligned over the deformed strips 134 of the second component 130. As the two sets of deformed strips 123, 133 and 124, 134 are mutually aligned, they together cooperate to form a channel 160 which runs the length of the seaming element 100, along the eventual seam line, so that a securing means, such as pintle 140, can be inserted through channel 160 to secure the first and second components 120 and 130 together. The first and second components 120, 130 are secured to the respective ends or edges of the industrial textile to be joined, if they are not already integrally constructed with the industrial textile. Thereafter, when tension is applied to the second edge regions 122 and 132 of first and second components 120, 130, the free edges 121 and 131 move towards each other until further movement is halted by pintle 140 located in channel 160. Tension thus holds the pintle 140 in place and prevents further movement.

Referring now to Figure 4, which is a side view of the seaming element 100 shown in Figure 3, first and second components 120 and 130 are shown in the connected position, secured by pintle 140. In this figure, free edge 121 of first component 120 is located above and in contact with second edge region 132 of second component 130, and free edge 131 of second component 130 is shown located beneath and in contact with second edge region 122 of component 120. Strips 123 and 133 from first and second components 120 and 130 respectively are shown as deformed upwards to create an upper portion of channel 160, whereas strips 124 and 134 from first and second components 120 and 130 are deformed downwards to form a lower portion of channel 160. Pintle 140 has been inserted into channel 160, to secure the first and second components 120 and 130 to each other, and to prevent further lateral movement in the plane of the seaming element of the free edges 121 and 131.

Both the embodiments shown in Figures 1 and 2, and in Figures 3 and 4, illustrate a hinge- type of seam, using a single securing means, in these figures a pintle 40 or 140. However, multiple securing means can be used, and for some situations, advantages of load distribution and durability may be achieved by providing two or more securing locations for the elements.

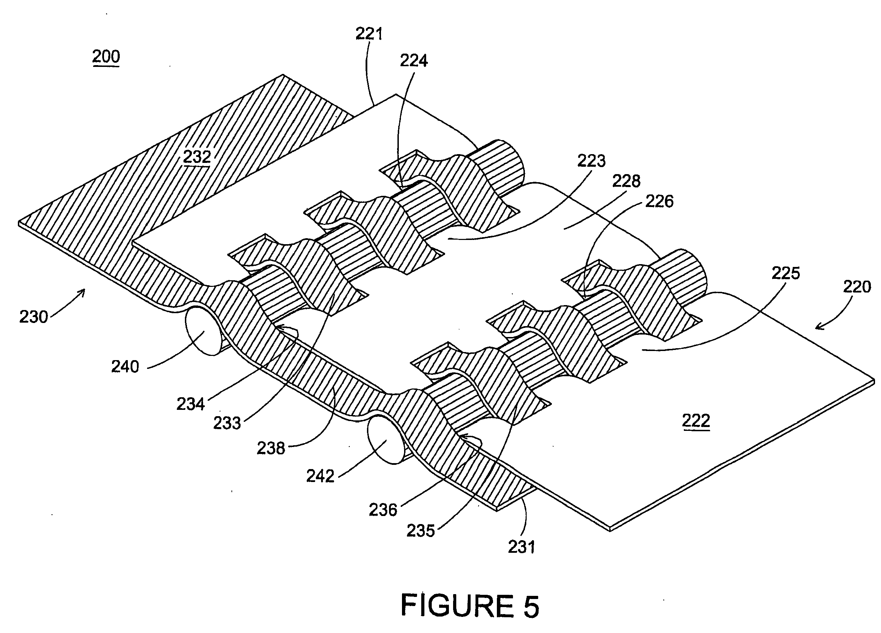

Figures 5 to 7 show a further embodiment of a seaming element 200, in which multiple securing means are provided, in this case two pintles 240, 242. Referring first to Figure 5, first component 220 has free edge 221 and second end region 222, and second component 230 correspondingly has free edge 231 and second end region 232. The first component 220 is cut in the manner of the embodiment of Figure 1, but two rows of apertures 224, 226 are provided, between strips 223, 225; similarly, second component 230 is cut to form two rows of apertures 234, 236 between strips 233, 235, the two rows being spaced apart by intermediate regions 228, 238 respectively.

To prepare the first and second components 220, 230 and to connect them together, the strips of each row are suitably deformed as in the manner of the embodiment of Figure 1, and first component 220 is aligned over second component 230 so that the deformed strips 223, 225, 233, 235 of each row are aligned with the corresponding apertures 234, 236, 224, 226 respectively. When this alignment is complete, pintles 240, 242 can be inserted through respective channels 260, 262, to secure the first and second components 220, 230 to each other, and prevent movement of the first and second components 220, 230 in the plane of the seaming element.

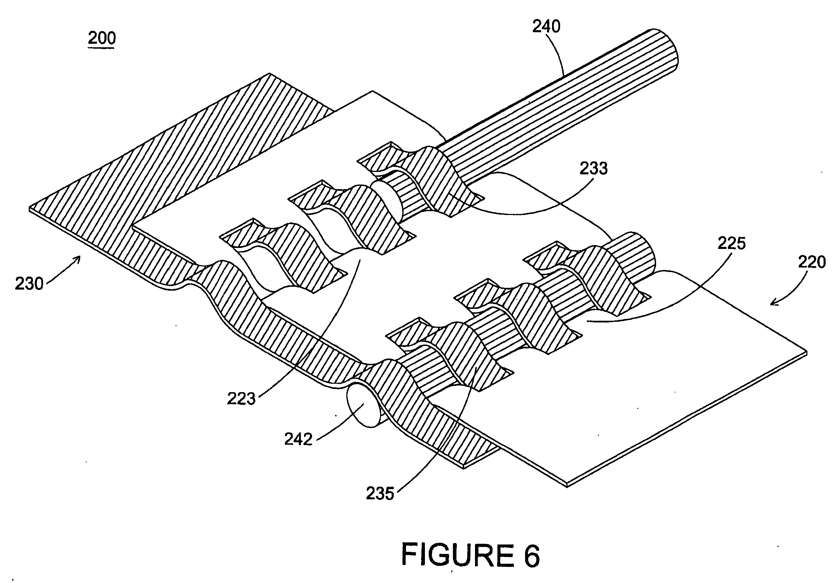

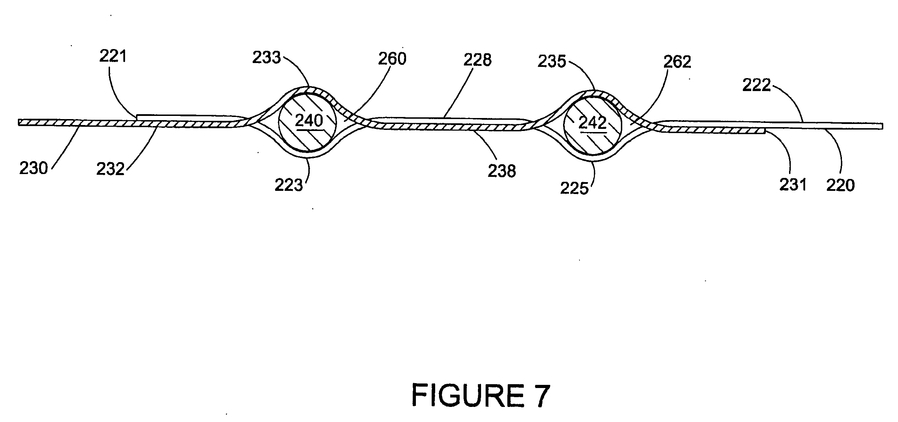

Figure 6 is a second perspective view of the embodiment of Figure 5, to illustrate the manner of securing the first and second components together in this embodiment. In the figure, pintle 242 is shown as already secured within the channel (262 in Figure 7) provided by strips 225 and 235, whereas pintle 240 is shown in the process of insertion into the channel (260 in Figure 7) provided by strips 223, 233.

Referring now to Figure 7, which is a side view of the seaming element 200 shown in Figure 5, first and second components 220 and 230 are shown in the connected position, secured by pintles 240, 242, in channels 260, 262, sufficiently spaced from the free edges 221, 231. Intermediate regions 228, 238 are aligned with each other and can be further secured to each other if necessary by any suitable means such as welding, or other bonding means.

As an alternative to the embodiment of Figures 5 to 7, multiple securing means can be provided in a similar manner to that embodiment, but in which the manner of cutting the first and second components to create the deformable strips corresponds to that of the embodiment of Figure 3, described above.

Where the first and second components are constructed separately from the industrial textile to be seamed, the second edge regions 22 and 32, and 122 and 132, are secured to the industrial textile by any suitable means, for example by welding, gluing or other bonding to the opposed ends or edges of the industrial textile. The top and bottom sides of the seaming element may be profiled or otherwise modified to suit the needs of the environment in which the textile will be operating. The novel seam may be used with both woven textiles, or with nonwoven textiles, and as noted above, the first and second components can be integrally constructed with the industrial textile itself.

## Claims

1. A seaming element (10, 100) for selectively seaming a pair of seamable edges of an industrial textile, the seaming element (10, 100) comprising a first component (20, 120) and a second component (30, 130) wherein each component (20, 30; 120, 130):
(i) is constructed of a substantially planar polymeric film, and comprises a textile body contacting portion (22, 32; 122, 132) and a free edge (21, 31; 121, 131); and
(ii) comprises at least a first row comprising a plurality of pairs of substantially parallel slits (128), each slit (128) having a first end and a second end, each pair of parallel slits (128) defining a strip (23, 123) which is deformable out of a plane of the film, the pairs of parallel slits (128) being arranged in a spaced apart relationship across the respective component such that each of the first ends is substantially equidistant from the free edge (21, 31; 121, 131) of the component (20, 30; 120, 130); and
wherein arrangeable to be the first (20, 120) and second components (30, 130) are attached to respective seamable edges of the pair of seamable edges of the industrial textile; and the two components (20, 30) are brought together, in such a way that the free edge (21, 121) of the first component (20, 120) is located above and in contact with the textile body contacting portion (32, 132) of the second component (30, 130) ; and the free edge (31, 131) of the second component (30, 130) is located beneath and in contact with the textile body contacting portion (22, 122) the first component (20, 120), selectively deformed strips (23, 123) of the first component (20, 120) are alignable with selectively deformed strips (33, 133) of the second component (30, 130) to interengage the first (20, 120) and second (30, 130) components and to define a channel (60, 160) dimensioned to receive a seam securing means (40, 140).

2. A seaming element (10) according to Claim 1, wherein for each component (20, 30):
(a) each strip (23, 33) is constructed and arranged to be deformed in the same direction in relation to the plane of the film, and in an aligned position of the components (20, 30) to project towards the plane of the other component (20, 30); and
(b) between each adjacent pair of the strips (23, 33), the slits further at least partly define an aperture (24, 34) constructed and arranged to receive and accommodate therethrough one of the deformed strips (23, 33) of the other component (20, 30).

3. A seaming element (100) according to Claim 1, wherein for each component (120, 130), the strips (123, 133) are constructed and arranged to be deformed in alternating directions in relation to the plane of the film, such that in an aligned position of the components (120, 130) each strip (123) of the first component (120) is adjacent along its length to one of the strips (133) of the second component (130), and each strip (133) of the second component (130) is adjacent along its length to one of the strips (123) of the first component (120).

4. A seaming element (10, 100) according to any one of Claims 1 to 3, wherein the securing means is a pintle (40, 140).

5. A seaming element (10, 100) according to Claim 4, wherein the pintle (40, 140) has a cross-sectional configuration selected from circular, elliptical and rectangular.

6. A seaming element (200) according to Claim 4 or Claim 5, wherein each component (220, 230) comprises a plurality of rows of pairs of slits.

7. A seaming element (200) according to Claim 6, wherein each component (220, 230) comprises two rows of pairs of slits.

8. An industrial textile comprising a seaming element (10, 100, 200) according to any one of Claims 1 to 7.

9. An industrial textile according to Claim 8, wherein the seaming element (10, 100, 200) is integrally constructed with the textile.

10. A method of seaming a first and second seamable portion of an industrial textile, the method comprising the steps of
(a) providing a seaming element (10, 100) according to any one of Claims 1 to 7;
(b) securing the first component (20, 120) of the seaming element (10, 100) to the first seamable portion;
(c) securing the second component (30, 130) of the seaming element (10, 100) to the second seamable portion;
(d) aligning the first (20, 120) and second components (30, 130) with each other;
(e) interengaging the strips (23, 123) of the first component (20, 120) with the strips (33, 133) of the second component (30, 130) to provide a channel (60, 160); and
(f) providing and securing a securing means (40, 140) within the channel (60, 160).

## Patentansprüche

1. Säumelement (10, 100) zum selektives Säumen eines Paars von säumbaren Rändern einer Industrietextilie, wobei das Säumelement (10, 100) eine erste Komponente (20, 120) und eine zweite Komponente (30, 130) umfasst, wobei jede Komponente (20, 30; 120, 130)
(i) aus einem im Wesentlichen ebenen Polymerfilm hergestellt ist und einen Textilkörper-Kontaktierungsabschnitt (22, 32; 122, 132) und einen freien Rand (21, 31; 121, 131) umfasst; und
(ii) mindestens eine erste Reihe mit mehreren Paaren von im Wesentlichen parallelen Schlitzen (128) umfasst, wobei jeder Schlitz (128) ein erstes Ende und ein zweites Ende aufweist, wobei jedes Paar von parallelen Schlitzen (128) einen Streifen (23, 123) ausbildet, der aus einer Ebene des Films heraus verformbar ist, wobei die Paare von parallelen Schlitzen (128) in einer beabstandeten Beziehung über die jeweilige Komponente angeordnet sind, so dass jedes der ersten Ende im Wesentlichen gleicht weit entfernt von dem freien Ende (21, 31; 121, 131) der Komponente (20, 30; 120, 130) ist; und
wobei die erste (20, 120) und die zweite Komponente (30, 130) anordenbar sind, um an jeweiligen säumbaren Rändern des Paars von säumbaren Rändern der Industrietextilie angebracht zu werden; und die zwei Komponenten (20, 30) so zusammengebracht werden, dass sich der freie Rand (21, 121) der ersten Komponente (20, 120) oberhalb und in Kontakt mit dem Textilkörper-Kontaktierungsabschnitt (32, 132) der zweiten Komponente (30, 130) befindet; und sich der freie Rand (31, 131) der zweiten Komponente (30, 130) unterhalb und in Kontakt mit dem Textilkörper-Kontaktierungsabschnitt (22, 122) der ersten Komponente (20, 120) befindet, selektiv verformte Streifen (23, 123) der ersten Komponente (20, 120) mit selektiv verformten Streifen (33, 133) der zweiten Komponente (30, 130) ausrichtbar sind, um die erste (20, 120) und die zweite (30, 130) Komponente in Eingriff zu bringen und einen Kanal (60, 160) auszubilden, der so bemessen ist, dass er ein Saumsicherungsmittel (40, 140) aufnimmt.

2. Säumelement (10) nach Anspruch 1, wobei für jede Komponente (20, 30):
(a) jeder Streifen (23, 33) hergestellt und angeordnet ist, um bezüglich der Ebene des Films in der gleichen Richtung verformt zu werden und in einer ausgerichteten Position der Komponenten (30, 30) hin zur Ebene der anderen Komponente (20, 30) zu ragen; und
(b) zwischen jedem benachbarten Paar der Streifen (23, 33) die Schlitze weiterhin zumindest teilweise eine Öffnung (24, 34) ausbilden, die hergestellt und ausgelegt ist, um dadurch einen der verformten Streifen (23, 33) der anderen Komponente (20, 30) aufzunehmen und unterzubringen.

3. Säumelement (100) nach Anspruch 1, wobei für jede Komponente (120, 130) die Streifen (123, 133) so hergestellt und angeordnet sind, dass sie bezüglich der Ebene des Films in abwechselnden Richtungen verformt sind, so dass in einer ausgerichteten Position der Komponenten (120, 130) jeder Streifen (123) der ersten Komponente (120) entlang seiner Länge an einen der Streifen (133) der zweiten Komponente (130) angrenzt und jeder Streifen (133) der zweiten Komponente (130) entlang seiner Länge an einen der Streifen (123) der ersten Komponente (120) angrenzt.

4. Säumelement (10, 100) nach einem der Ansprüche 1 bis 3, wobei das Sicherungsmittel ein Zapfen (40, 140) ist.

5. Säumelement (10, 100) nach Anspruch 4, wobei der Zapfen (40, 140) eine aus kreisförmig, elliptisch und rechteckig gewählte Querschnittkonfiguration aufweist.

6. Säumelement (200) nach Anspruch 4 oder 5, wobei jede Komponente (220, 230) mehrere Reihen von Paaren von Schlitzen umfasst.

7. Säumelement (200) nach Anspruch 6, wobei jede Komponente (220, 230) zwei Reihen von Paaren von Schlitzen umfasst.

8. Industrietextilie, die ein Säumelement (10, 100, 200) nach einem der Ansprüche 1 bis 7 umfasst.

9. Industrietextilie nach Anspruch 8, wobei das Säumelement (10, 100, 200) integral mit der Textilie hergestellt ist.

10. Verfahren zum Säumen eines ersten und zweiten säumbaren Abschnitts einer Industrietextilie, wobei das Verfahren die folgenden Schritte umfasst:
(a) Vorsehen eines Säumelements (10, 100) nach einem der Ansprüche 1 bis 7;
(b) Sichern der ersten Komponente (20, 120) des Säumelements (10, 100) an dem ersten säumbaren Abschnitt;
(c) Sichern der zweiten Komponente (30, 130) des Säumelements (10, 100) an dem zweiten säumbaren Abschnitt;
(d) Ausrichten der ersten (20, 120) und der zweiten Komponente (30, 130) miteinander;
(e) Ineingriffbringen der Streifen (23, 123) der ersten Komponente (20, 120) mit den Streifen (33, 133) der zweiten Komponente (30, 130), um einen Kanal (60, 160) vorzusehen; und
(f) Vorsehen und Sichern eines Sicherungsmittels (40, 140) in dem Kanal (60, 160).

## Revendications

1. Élément de formation de coutures (10, 100) destiné à coudre de manière sélective une paire de bords pouvant être cousus d'un textile industriel, l'élément de formation de coutures (10, 100) comprenant un premier composant (20, 120) et un second composant (30, 130), dans lequel chaque composant (20, 30 ; 120, 130) :
(i) est constitué d'un film polymère sensiblement plan, et comprend une partie de contact avec le corps textile (22, 32 ; 122, 132) et un bord libre (21, 31 ; 121, 131) ; et
(ii) comprend au moins une première rangée comprenant une pluralité de paires de fentes (128) sensiblement parallèles, chaque fente (128) comportant une première extrémité et une seconde extrémité, chaque paire de fentes (128) parallèles définissant une bande (23, 123) qui est déformable en partant d'un plan du film, les paires de fentes (128) parallèles étant agencées espacées les unes par rapport aux autres à travers le composant respectif de sorte que chacune des premières extrémités est sensiblement équidistante du bord libre (21,31 ; 121, 131) du composant (20, 30 ; 120, 130) ; et
dans lequel le premier (20, 120) et le second composant (30, 130) peuvent être agencés pour être reliés à des bords pouvant être cousus respectifs de la paire de bords pouvant être cousus du textile industriel ; et les deux composants (20, 30) sont assemblés de telle manière que le bord libre (21, 121) du premier composant (20, 120) est situé au-dessus de et en contact avec la partie de contact avec le corps textile (32, 132) du second composant (30, 130) ; et le bord libre (31, 131) du second composant (30, 130) est situé sous et en contact avec la partie de contact avec le corps textile (22, 122) du premier composant (20, 120), des bandes (23, 123) déformées de manière sélective du premier composant (20, 120) peuvent être alignées avec des bandes (33, 133) déformées de manière sélective du second composant (30, 130) pour venir mutuellement en prise avec les premier (20, 120) et second (30, 130) composants et pour définir un canal (60, 160) dimensionné pour recevoir un moyen de fixation de couture (40, 140).

2. Élément de formation de coutures (10) selon la revendication 1, dans lequel, pour chaque composant (20, 30) :
(a) chaque bande (23, 33) est conçue et agencée pour être déformée dans la même direction par rapport au plan du film, et, dans une position alignée des composants (20, 30), pour dépasser vers le plan de l'autre composant (20, 30) ; et
(b) entre chaque paire adjacente des bandes (23, 33), les fentes définissent en outre au moins partiellement un orifice (24, 34) conçu et agencé pour recevoir et loger à travers lui une des bandes (23, 33) déformées de l'autre composant (20, 30).

3. Élément de formation de coutures (100) selon la revendication 1, dans lequel, pour chaque composant (120, 130), les bandes (123, 133) sont conçues et agencées pour être déformées dans des directions alternatives par rapport au plan du film, de telle manière que dans une position alignée des composants (120, 130), chaque bande (123) du premier composant (120) est adjacente le long de sa longueur à l'une des bandes (133) du second composant (130), et chaque bande (133) du second composant (130) est adjacente le long de sa longueur à l'une des bandes (123) du premier composant (120).

4. Élément de formation de coutures (10, 100) selon l'une quelconque des revendications 1 à 3, dans lequel le moyen de fixation est une cheville de charnière (40, 140).

5. Élément de formation de coutures (10, 100) selon la revendication 4, dans lequel la cheville de charnière (40, 140) présente une configuration de section transversale choisie entre circulaire, elliptique et rectangulaire.

6. Élément de formation de coutures (200) selon la revendication 4 ou la revendication 5, dans lequel chaque composant (220, 230) comprend une pluralité de rangées de paires de fentes.

7. Élément de formation de coutures (200) selon la revendication 6, dans lequel chaque composant (220, 230) comprend deux rangées de paires de fentes.

8. Textile industriel comprenant un élément de formation de coutures (10, 100, 200) selon l'une quelconque des revendications 1 à 7.

9. Textile industriel selon la revendication 8, dans lequel l'élément de formation de coutures (10, 100, 200) est conçu d'un seul tenant avec le textile.

10. Procédé de couture d'une première et d'une seconde partie pouvant être cousue d'un tissu industriel, le procédé comprenant les étapes consistant à
(a) fournir un élément de formation de coutures (10, 100) selon l'une quelconque des revendications 1 à 7 ;
(b) fixer le premier composant (20, 120) de l'élément de formation de coutures (10, 100) à la première partie pouvant être cousue ;
(c) fixer le second composant (30, 130) de l'élément de formation de coutures (10, 100) à la seconde partie pouvant être cousue ;
(d) aligner les premier (20, 120) et second composants (30, 130) l'un avec l'autre ;
(e) mettre mutuellement en prise les bandes (23, 123) du premier composant (20, 120) et les bandes (33, 133) du second composant (30, 130) afin de créer un canal (60, 160) ; et
(f) fournir et fixer un moyen de fixation (40, 140) à l'intérieur du canal (60, 160).
